# EUROPÄISCHE PATENTANMELDUNG

(11) **EP 3 928 612 A1**
(43) Veröffentlichungstag der Anmeldung: **29.12.2021**
(21) Anmeldenummer: 21180351.5
(22) Anmeldetag: 18.06.2021
(51) Int. Cl.: A01D 41/14, A01D 34/66

(54) **LANDWIRTSCHAFTLICHE MASCHINE**

(30) Priorität: 25.06.2020 DE 102020116764; 18.09.2020 DE 102020124362
(71) Anmelder: Pöttinger Landtechnik GmbH, 4710 Grieskirchen (AT)
(72) Erfinder: ERNST, Christian, 4710 Grieskirchen (AT); GREIFENEDER, August, 4710 Grieskirchen (AT); RUTTINGER, Peter, 4710 Grieskirchen (AT); LEHNER, Josef, 4710 Grieskirchen (AT)
(74) Vertreter: Thoma, Michael

(57) **Zusammenfassung**

Die vorliegende Erfindung betrifft eine landwirtschaftliche Maschine, insbesondere in Form eines Mähwerks, umfassend zumindest ein über den Boden zu führendes Arbeitsaggregat, das zumindest zwei Aggregatsteile umfasst, die durch eine Gelenkverbindung miteinander verbunden und in der Arbeitsstellung zur Bodenanpassung um eine liegende Bodenanpassachse zueinander neigbar sind. Erfindungsgemäß wird die Gelenkverbindung zwischen den Aggregatsteilen von einer Lenkeranordnung umfassend zwei Verbindungslenker gebildet, die jeweils mit einem Endabschnitt gelenkig an dem einen Aggregatsteil angelenkt und mit einem gegenüberliegenden Endabschnitt gelenkig an dem anderen Aggregatsteil angelenkt sind und in divergierende Richtungen ausgerichtet sind derart, dass die Verbindungslenker die Bodenanpassachse in Form einer Momentandrehachse ausbilden. Dabei kann die genannte Lenkeranordnung nicht nur ein Abknicken bzw. Abwinkeln der Aggregatsteile zueinander um die genannte Bodenanpassachse, sondern auch Relativbewegungen der Aggregatsteile zueinander in Fahrtrichtung bzw. näherungsweise parallel zu der genannten Bodenanpassachse ermöglichen.

## Beschreibung

Die vorliegende Erfindung betrifft eine landwirtschaftliche Maschine, insbesondere in Form eines Mähwerks, umfassend zumindest ein über den Boden zu führendes Arbeitsaggregat, das zumindest zwei Aggregatsteile umfasst, die durch eine Gelenkverbindung miteinander verbunden und in der Arbeitsstellung zur Bodenanpassung um eine liegende Bodenanpassachse zueinander neigbar sind.

Bei landwirtschaftlichen Maschinen größerer Arbeitsbreite werden die Arbeitsaggregate bisweilen unterteilt, um eine bessere Bodenanpassung zu ermöglichen. Die länglichen, oft balkenförmigen Arbeitsaggregaten werden dabei in mehrere Aggregatsteile unterteilt, die durch eine Gelenkverbindung miteinander gelenkig verbunden und in Arbeitsstellung zur Bodenanpassung um eine liegende Gelenkachse zueinander abwinkelbar oder knickbar sind. Durch die Gelenkverbindung ist einerseits sichergestellt, dass die Aggregatsteile zueinander koordinierte, aufeinander abgestimmte Arbeitsstellungen einnehmen, während gleichzeitig sich die Aggregatsteile individuell an die Bodenkontur anpassen können. Überfährt beispielsweise ein rechter Aggregatsteil eine geneigte Bodenflanke, kann sich dieser rechte Aggregatsteil aufwärts neigen, während der linke Aggregatsteil noch in einer horizontalen Stellung verbleiben kann. Wird eine Längssenke oder eine längswallartige Erhebung überfahren, können die Aggregatsteile sich auch gegenläufig neigen, um sich nach Art hängender Flügel an den Längswall oder nach Art V-förmig ansteigender Flügel an die Längssenke anzupassen.

Bei einem Mähwerk kann ein - insgesamt grob gesprochen - balkenförmiges Mähaggregat in mehrere Aggregats- bzw. Mähbalkenteile unterteilt sein, die an ihrer Schnittstelle bzw. an den einander zugewandten Endabschnitten miteinander gelenkig verbunden sind, um die genannten Bodenanpassbewegungen zu ermöglichen. Die Gelenkverbindung sieht hierzu eine liegende, näherungsweise fahrtrichtungsparallele Bodenanpassachse vor, um die die Aggregats- bzw. Mähbalkenteile zueinander abgewinkelt werden können, wobei solche Abwinkelbewegungen aus der Neutralstellung heraus, in der die Mähbalkenteile zueinander eine 180°-Stellung einnehmen, ein Überstrecken nach unten oder ein Anwinkeln nach oben umfassen können. In ähnlicher Weise kann ein Merger in mehrere Aggregats- bzw. Förderer-Teile unterteilt sein, die durch eine entsprechende Gelenkverbindung miteinander verbunden sein können.

Beispielsweise zeigt die Schrift EP 1 384 324 B2 ein Mähwerk, dessen Mähwerksteile in der Arbeitsstellung um eine fahrtrichtungsparallele Achse zueinander abknicken können. Genauer gesagt sind die einander benachbarten Randabschnitte der Mähwerksteile über starre Streben an zwei benachbarten, liegend in Fahrtrichtung ausgerichteten Schwenkachsen gelenkig angelenkt, wobei die genannten Schwenkachsen wiederum an einem Tragarm befestigt sind, der an einem zentralen Maschinenrahmen aufgehängt ist. Dabei ist der genannte Tragarm gesplittet ausgebildet, um die Mähwerksteile nach oben in eine Transportstellung verschwenken zu können, wobei die gesplitteten Tragarmlenker als Dämpfer ausgebildet sind und zusätzliche Haupttragarme, die die Mähwerksteile von oben her zentral aufhängen, über Langlochführungen individuell höhenverschwenkbar sind, um die Anpassbewegungen der Mähwerksteile zu ermöglichen. Insgesamt ist die Lenkeranordnung aufwändig und kompliziert, wobei trotzdem keine komplexeren Anpassbewegungen an schwierige Bodenkonturen möglich sind.

Ein Mähwerk mit ebenfalls geteilter Mähwerksausbildung zeigt auch die Schrift DE 10 2015 115 829 A1, wobei dort die zueinander schwenkbaren Mähwerksteile einerseits an oberen Enden der benachbarten Mähwerksteilabschnitte gelenkig verbunden sind, um die Mähwerksteile für den Straßentransport aufeinanderlegen zu können, und andererseits an einem unteren Abschnitt der benachbarten Mähwerksteile gelenkig verbunden sind, um Bodenanpassbewegungen zu ermöglichen. Dabei ist zumindest das untere Gelenk in zwei Hälften entriegelbar, um das Verbringen in die Transportstellung zu ermöglichen.

Ähnliche Anforderungen an die Bodenanpassung werden auch an andere landwirtschaftliche Maschinentypen gestellt, die ein längliches bzw. eine große Arbeitsbreite aufweisendes, über den Boden zu führendes Arbeitsaggregat aufweisen, wie dies beispielsweise bei Bandschwadern oder allgemein Schwadern und Zettern, oder auch Sämaschinen und Bodenbearbeitungsgeräten wie Grubbern oder Eggen der Fall ist, deren Bodenbearbeitungswerkzeuge über den Boden geführt werden und dabei an die Bodenkontur angepasst werden müssen, um eine gleichmäßige Eindringtiefe zu erzielen. Andererseits ist beispielsweise bei Mergern das Querförderband bodennah über den Boden zu führen, um das Aufsammeln zu erleichtern, so dass auch hier eine Unterteilung eines länglichen Bandförderers in mehrere Förderbandabschnitte hilfreich ist, um die Bodenanpassung zu verbessern.

Auch beim Aufsammeln von Erntegut vom Boden ist es bekannt, die Stachelwalze in mehrere Walzenteile zu untergliedern, die durch eine Gelenkverbindung miteinander verbunden und zueinander abknickbar sind, vgl. beispielsweise DE 20 2010 010 038 U1.

Für die Gelenkverbindung zwischen den zueinander abwinkelbaren Aggregatsteilen ist jedoch nur sehr wenig Platz vorhanden, da die Aggregatsteile den Boden bzw. das darauf befindliche Erntegut natürlich auch im Bereich der Schnittstelle zwischen den Aggregatsteilen nahtlos bearbeiten müssen. Erschwerend kommt hinzu, dass die Bodenanpassachse zumindest näherungsweise in der Bearbeitungsebene angeordnet sein soll, um eine Kollision der Ränder der Aggregatsteile durch Querbewegungen, die mit zunehmendem Abstand von der Schwenkachse zunehmend größer werden, zu vermeiden. Diese Platzprobleme werden insbesondere auch dann verschärft, wenn mehrachsige Bodenanpassbewegungen ausgeführt werden sollen, für die ein einfaches Bolzengelenk mit einem Freiheitsgrad nicht ausreicht.

Der vorliegenden Erfindung liegt daher die Aufgabe zugrunde, eine verbesserte landwirtschaftliche Maschine der genannten Art zu schaffen, die Nachteile des Stands der Technik vermeidet und letzteren in vorteilhafter Weise weiterbildet. Insbesondere soll eine feine, leichtfüßige Bodenanpassung auch an schwierige Bodenkonturen ermöglicht werden, ohne hierfür eine den zur Verfügung stehenden Bauraum überfrachtende Gelenkverbindung zu benötigen, die den Schwenk- bzw. Verstellweg aufgrund drohender Kollisionen zu stark limitieren oder gar eine dichte Anordnung der Aggregatswerkzeuge für eine nahtlose Bearbeitungsfläche verhindern würde.

Erfindungsgemäß wird die genannte Aufgabe durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, die benachbarten Aggregatsteile durch ein Gelenkstabsystem aneinander zu koppeln, das die möglichen Relativbewegungen der Aggregatsteile zueinander steuert und die Bodenanpassachse, um die die Aggregatsteile zueinander abgewinkelt werden können, in Form einer virtuellen Momentandrehachse ausbildet. Erfindungsgemäß wird die Gelenkverbindung zwischen den Aggregatsteilen von einer Lenkeranordnung umfassend zwei Verbindungslenker gebildet, die jeweils mit einem Endabschnitt gelenkig an dem einen Aggregatsteil angelenkt und mit einem gegenüberliegenden Endabschnitt gelenkig an dem anderen Aggregatsteil angelenkt sind und in divergierende Richtungen ausgerichtet sind derart, dass die Verbindungslenker die Bodenanpassachse in Form einer Momentandrehachse ausbilden. Durch die divergierende, insbesondere einander kreuzende Ausrichtung der Verbindungslenker sind einerseits verschiedene Anpassbewegungen auch an schwierige Bodenkonturen möglich, andererseits können Kollisionsbewegungen der Aggregatsteile aufeinander zu und auch ein übermäßiger Höhenversatz zwischen den Aggregatsteilen, der eine ungleiche Boden- bzw. Erntegutbearbeitung zur Folge hätte, vermieden oder zumindest begrenzt werden.

In vorteilhafter Weiterbildung der Erfindung kann die genannte Lenkeranordnung nicht nur ein Abknicken bzw. Abwinkeln der Aggregatsteile zueinander um die genannte Bodenanpassachse, sondern auch Relativbewegungen der Aggregatsteile zueinander in Fahrtrichtung bzw. näherungsweise parallel zu der genannten Bodenanpassachse ermöglichen, sodass Ausweichbewegungen bei einem Anfahren an Hindernisse oder zu hohen Widerstandskräften ermöglicht werden. Fährt beispielsweise ein rechter Aggregatsteil an ein Hindernis an oder erfährt durch einen zu starken Eingriff am Boden zu hohe Widerstandskräfte, kann dieser rechte Aggregatsteil relativ zum linken Aggregatsteil ein Stück weit nach hinten nachgeben und ggf. gleichzeitig ein Stück weit nach oben schwenken bzw. fahren, um dem erhöhten Widerstand nachzugeben bzw. auszuweichen oder über das Hindernis hinwegzukommen, ohne dass dies gleichzeitig auch eine stärkere Bewegung des linken Aggregatsteils erforderlich machen würde. Durch eine geschickte Anordnung der Gelenkpunkte und Ausbildung der Gelenke kann eine solche zusätzliche Ausgleichs- bzw. Bodenanpassbewegung der Aggregatsteile zueinander über die Kinematik der Verbindungslenker erreicht werden, ohne komplexe Aufhängungsstrukturen vorsehen zu müssen.

Um die verschiedenen Ausgleichs- bzw. Anpassbewegungen zu ermöglichen, können die genannten Verbindungslenker jeweils mehrachsig gelenkig bzw. mehrachsig schwenkbar an ihren Anlenkpunkten an den beiden Aggregatsteilen angelenkt sein, sodass jeder Verbindungslenker zu jedem der beiden Aggregatsteile, an dem er angelenkt ist, mehrachsig verschwenkbar ist.

Insbesondere können die Verbindungslenker durch Kugelgelenke oder andere mehrachsig verdrehbare Gelenke wie beispielsweise Kardangelenke an den Aggregatsteilen befestigt sein. Hierdurch können nicht nur komplexe Ausgleichs- und Anpassbewegungen ermöglicht werden, sondern es wird auch eine stabile Verbindung zwischen den Aggregatsteilen mit einer einfachen Lenkerausbildung erreicht.

Alternativ wäre es aber auch möglich, dass andere Gelenksarten mit anderen Freiheitsgraden bzw. anderen Kombinationen von Freiheits- und Festlegungsgraden zur Anlenkung der Verbindungslenker an den Aggregatsteilen verwendet werden. Beispielsweise könnte zumindest einer der Verbindungslenker durch zumindest ein Drehschubgelenk an einem der Aggregatsteile angelenkt sein, wobei solche alternativen Gelenksformen für die Anlenkpunkte auch mit einem Kugelgelenk am anderen Lenkerende kombiniert sein können.

Vorteilhafterweise bilden die beiden Verbindungslenker der Lenkeranordnung mit ihren Gelenken, durch die sie an den Aggregatsteilen angelenkt sind, ein Viergelenks-Stabsystem, das die genannte liegende, zumindest näherungsweise fahrtrichtungsparallele Bodenanpassachse, die ein Abwinkeln der Aggregatsteile relativ zueinander ermöglicht, ausbildet und vorteilhafterweise zumindest noch einen weiteren Freiheitsgrad besitzt, insbesondere eine zusätzliche Verschiebe- und/oder Pendelbewegung der Aggregatsteile zueinander zumindest näherungsweise parallel zur Fahrtrichtung und/oder in aufrechter Richtung bzw. mit Bewegungskomponenten in diesen Richtungen ermöglicht.

Vorteilhafterweise können die Lenker bei Betrachtung senkrecht auf eine Ebene, die parallel zu beiden Lenkern ausgerichtet ist, zueinander zumindest näherungsweise rechtwinklig ausgerichtet sein, beispielsweise unter einem Winkel von 90° +/- 5° oder +/- 10°, wenn sich die beiden Aggregatsteile in einer unausgelenkten Neutralstellung bzw. Mittelstellung befinden.

Die Lenker müssen bei der besagten Betrachtung mit Blickrichtung senkrecht auf eine zu beiden Lenkern parallele Ebene einander nicht tatsächlich kreuzen in dem Sinne, dass die Anlenkpunkte des einen Lenkers auf gegenüberliegenden Seiten des anderen Lenkers liegen, was gleichwohl der Fall sein kann. Vorteilhafterweise können die Lenker die kreuzende bzw. näherungsweise rechtwinklige Ausrichtung auch dadurch einnehmen, dass die Verbindungsgeraden durch die Anlenkpunkte des einen Lenkers einerseits und die Anlenkpunkte des anderen Lenkers andererseits einander kreuzen - also sozusagen die Verlängerung des einen Lenkers den anderen Lenker kreuzt - und dabei zueinander näherungsweise rechtwinklig sind. In diesem Fall sind die Anlenkpunkte des einen Lenkers auf derselben Seite des anderen Lenkers angeordnet. Insbesondere kann der eine Lenker bzw. die durch dessen Anlenkpunkte gehende Verbindungsgerade den anderen Lenker etwa mittig oder zumindest zwischen dessen beiden Anlenkpunkten kreuzen, wenn man die genannte Ebene betrachtet, die zu beiden Lenkern parallel ist.

Gemäß einer vorteilhaften Ausbildung der Erfindung kann einer der beiden Verbindungslenker liegend quer zur Fahrtrichtung ausgerichtet sein, während der andere Lenker stehend ausgerichtet sein kann. Anstelle einer solchen Ausrichtung der beiden Lenker nach Art eines "+"-Zeichens, können die beiden Verbindungslenker aber auch in einer dazu verdrehten Anordnung ausgerichtet sein, beispielsweise in einer zueinander gegenläufig ansteigenden Anordnung, wie dies bei einem "x"-Zeichen der Fall ist.

Ist die Anordnung in der zuvor genannten Weise nach Art eines "+"-Zeichens, kann der liegende Lenker mit seinen beiden Endabschnitten vorteilhafterweise an einem unteren, bodennahen Teilabschnitt der Aggregatsteile angelenkt sein, insbesondere etwa in bzw. nahe bei der Bearbeitungsebene, in der die Werkzeuge der Arbeitsaggregate den Boden bzw. das darauf befindliche Erntegut bearbeiten.

Hiervon unabhängig kann der liegend ausgerichtete Lenker unterhalb des stehend ausgerichteten Lenkers angeordnet sein, beispielsweise dergestalt, dass sich der untere Anlenkpunkt des stehenden Lenkers leicht oberhalb des unteren liegenden Lenkers oder nahe bei dem liegenden Lenker oder in derselben bzw. vergleichbaren Höhe wie der untere Lenker befindet.

Die zuvor genannte Ebene, die sich parallel zu beiden Lenkern erstreckt, kann in vorteilhafter Weise aufrecht quer zur Fahrtrichtung ausgerichtet sein, wobei die genannte Ebene insbesondere spitzwinklig zur Vertikalen schräg nach vorne oben ausgerichtet sein kann. Dementsprechend kann die Lenkeranordnung gegenüber einer vertikalen Ebene quer zur Fahrtrichtung leicht nach vorne verkippt sein bzw. in Fahrtrichtung schräg nach vorne ansteigen.

Insbesondere kann der genannte stehend ausgerichtete Lenker seinen oberen Anlenkpunkt in Fahrtrichtung gesehen weiter vorne haben als seinen unteren Anlenkpunkt. Beispielsweise kann der stehende Lenker unter einem Winkel von 5° bis 45° oder 10° bis 30° schräg nach vorne oben zur Vertikalen geneigt sein.

Die Lenkeranordnung kann sich auf einer Rückseite, das heißt auf einer in Fahrtrichtung betrachtet Heckseite der Aggregatsteile angeordnet sein.

Die Erfindung wird nachfolgend anhand eines bevorzugten Ausführungsbeispiels und zugehöriger Zeichnungen näher erläutert. In den Zeichnungen zeigen:

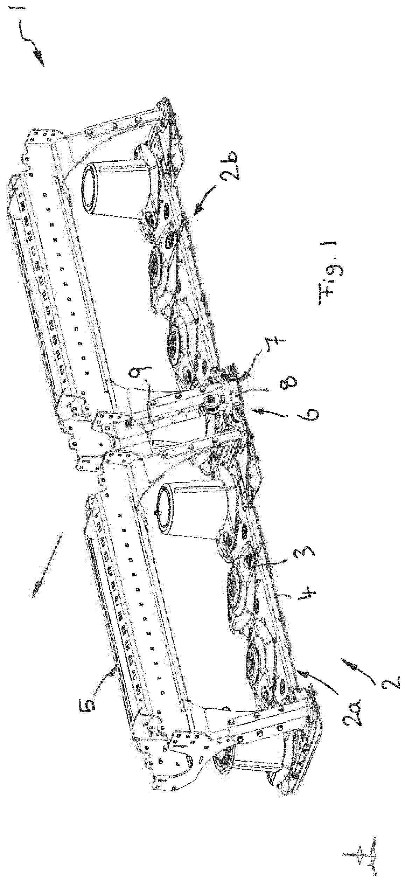

- Fig. 1:: eine perspektivische Ansicht einer landwirtschaftlichen Maschine nach einer vorteilhaften Ausführungsform der Erfindung in Form einer Mähmaschine, die das in zwei Aggregatsteile unterteilte Mähwerk schräg von hinten zeigt,
- Fig. 2:: eine ausschnittsweise, perspektivische Ansicht der Lenkeranordnung, die die Gelenkverbindung zwischen den beiden Mähwerksteilen bildet, schräg von hinten,

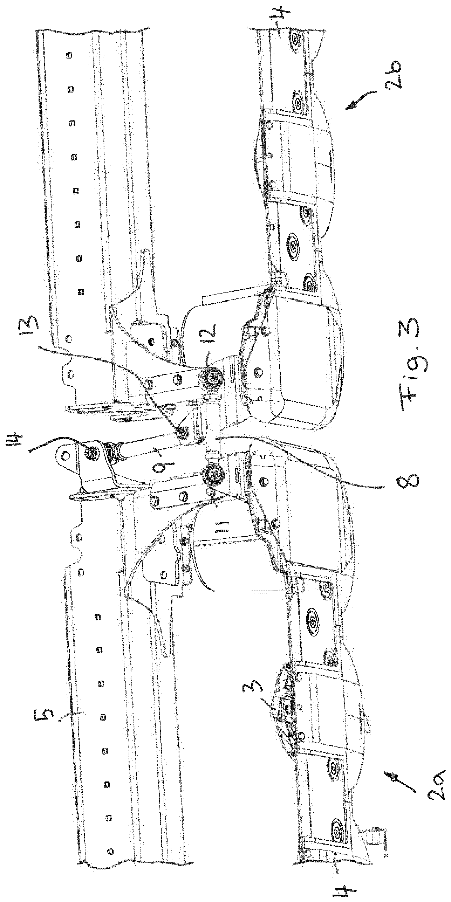

- Fig. 3:: eine perspektivische Ansicht der Lenkeranordnung zwischen den beiden Mähaggregatsteilen schräg von unten,
- Fig. 4:: eine Seitenansicht der Mähmaschine, die die heckseitige Anordnung der Lenker zwischen den Mähwerksteilen zeigt,

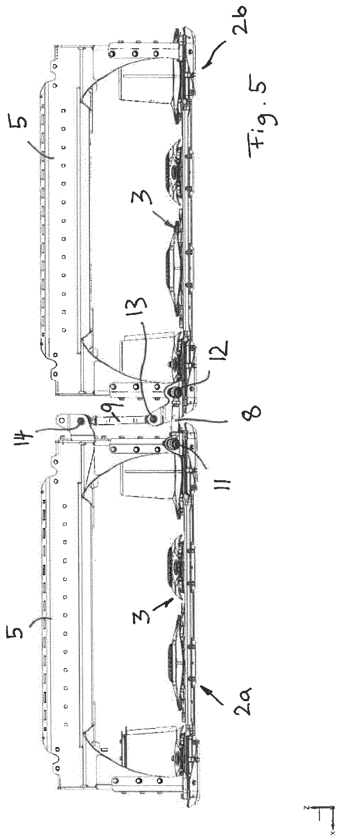

- Fig. 5:: eine Heckansicht der Mähmaschine aus den vorhergehenden Figuren, und

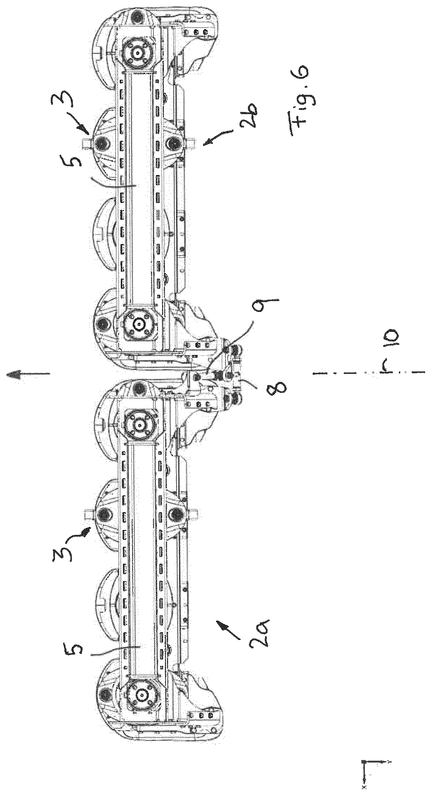

- Fig. 6:: eine Draufsicht auf die Mähmaschine aus den vorhergehenden Figuren.

Wie die Figuren zeigen, kann die landwirtschaftliche Maschine eine Mähmaschine 1 sein, die zumindest ein Mähwerk 2 als Arbeitsaggregat besitzen kann, welches an einem Tragarm aufgehängt schwebend über den Boden geführt werden kann, um dort stehendes Gras umzumähen. In ähnlicher Weise können die Bandfördereinheiten eines Bandschwaders bzw. Mergers schwebend aufgehängt über den Boden geführt werden, um von einer Pickup oder einer ähnlichen Aufsammelvorrichtung aufgenommenes Erntegut querzufördern und in einem Schwad abzulegen. Die Maschine kann unabhängig hiervon insbesondere als Anbaugerät ausgebildet sein, das an einen nicht gezeigten Schlepper angebaut werden kann, wobei der genannte Tragarm, an dem das gezeigte Mähwerk 2 aufgehängt ist, heckseitig vom Schlepper quer zur Fahrtrichtung auskragen kann, sodass das gezeigte Mähwerk 2 rechts oder links neben der Schlepperspur laufen kann. Alternativ kann der Tragarm aber auch frontseitig oder heckseitig in der Spur des Schleppers angeordnet sein bzw. das Mähwerk in der Spur des Schleppers laufend aufhängen.

Wie die Figuren ferner zeigen, kann das Mähwerk 2 mehrere um aufrechte Achsen rotatorisch antreibbare Messerbaugruppen beispielsweise in Form von Schneidtellern oder Schneidtrommeln aufweisen, die in einer Reihe quer zur Fahrtrichtung nebeneinander angeordnet sein können. Beispielsweise können die Messerbaugruppen 3 an einem Schneid- oder Messerbalken 4 angeordnet sein, der an einem Mähwerksträger 5 aufgehängt ist, der sich oberhalb der Messerbaugruppen 3 quer zur Fahrtrichtung erstreckt und an dem nicht eigens gezeigten, auskragenden Tragarm aufgehängt sein kann.

Das Mähwerk 2 ist dabei in zwei Aggregats- bzw. Mähwerksteile 2a und 2b unterteilt, sodass auch die genannten Schneidbalken 4 und Mähwerksträger 5 unterteilt sind bzw. zwei separate Balken- und Mähwerksträgerteile umfassen. Beispielsweise kann jeder Mähwerksteil 2a und 2b mehrere Messerbaugruppen 3 umfassen, die quer zur Fahrtrichtung nebeneinander an dem jeweiligen Messerbalkenteil 4 angeordnet sind.

Die beiden Mähwerksteile 2a und 2b sind an den einander angrenzenden Abschnitten der Mähwerksteile 2a und 2b miteinander durch eine Gelenkverbindung 6 gelenkig miteinander verbunden, sodass die beiden Mähwerksteile 2a und 2b relativ zueinander kontrollierte Ausgleichs- und Bodenanpassbewegungen ausführen können.

Die genannte Gelenkverbindung 6 wird dabei von einer Lenkeranordnung 7 gebildet, die aus zwei Lenkern bestehen oder zwei Lenker 8 und 9 umfassen kann, die jeweils mit einem Endabschnitt gelenkig an dem einen Mähwerksteil 2a und mit dem gegenüberliegenden Endabschnitt gelenkig an dem anderen Mähwerksteil 2b angelenkt sind und in der Arbeitsstellung des Mähwerks 2 zueinander kreuzend ausgerichtet sind derart, dass die genannten Verbindungslenker 8 und 9 die Bodenanpassachse 10, um die die Mähwerksteile 2a und 2b relativ zueinander abknicken bzw. abwinkeln können, in Form einer Momentandrehachse ausbilden.

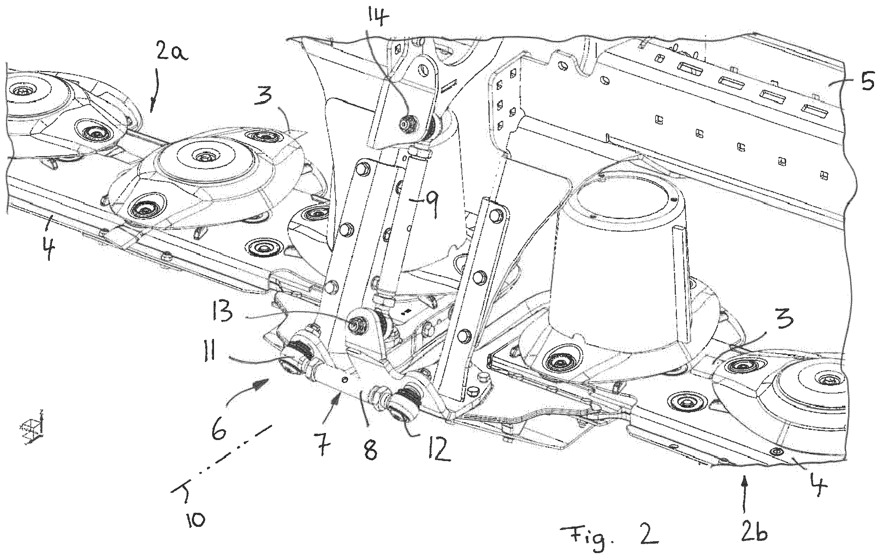

Die genannte Bodenanpassachse 10 kann sich vorteilhafterweise liegend und zumindest näherungsweise fahrtrichtungsparallel erstrecken, vgl. Figur 2. Die genannte Bodenanpassachse 10 ist dabei keine feste mechanische Achse, sondern eine virtuelle Momentandrehachse, die entlang einer Momentanpolbahn wandern kann, wenn sich die Mähwerksteile 2a und 2b relativ zueinander bewegen. Die Lenkeranordnung 7 kann vorteilhafterweise jedoch derart beschaffen sein, dass sich die genannte Bodenanpassachse 10 auch bei Wandern entlang einer Momentanpolbahn im Bereich zwischen den beiden Mähwerksteilen 2a und 2b und/oder vorteilhafterweise in der oder nahe bei der Bearbeitungsebene der Messerbaugruppen 3 erstreckt. Vorteilhafterweise ist die Bodenanpassachse 10 zumindest bodennah ausgerichtet und/oder einem unteren Abschnitt der Mähwerksteile 2a und 2b zugeordnet.

In vorteilhafter Weiterbildung der Erfindung kann die genannte Lenkeranordnung 7 nicht nur ein Abknicken bzw. Abwinkeln der Aggregatsteile 2a, 2b zueinander um die genannte Bodenanpassachse 10, sondern auch Relativbewegungen der Aggregatsteile zueinander in Fahrtrichtung bzw. näherungsweise parallel zu der genannten Bodenanpassachse 10 ermöglichen, sodass Ausweichbewegungen bei einem Anfahren an Hindernisse oder zu hohen Widerstandskräften ermöglicht werden.

Wie die Figuren zeigen, kann einer der Lenker 8 liegend ausgerichtet sein, sodass seine beiden Anlenkpunkte 11 und 12 zumindest in der Neutralstellung der beiden Mähwerksteile 2a und 2b zumindest näherungsweise auf demselben Höhenniveau liegen.

Der andere Lenker 9 kann stehend ausgerichtet sein, sodass sich die Anlenkpunkte 13 und 14 des stehenden Lenkers 9 übereinander bzw. schräg übereinander befinden können, vgl. Figur 2.

Die genannten Verbindungslenker 8 und 9 können starr ausgebildet sein und eine gerade Längsachse besitzen, wobei die Längsachse aber auch gebogen und/oder abgeknickt ausgebildet sein kann. Die Verbindungslenker 8 und 9 können aber auch längenveränderbar, beispielsweise teleskopierbar oder nach Art einer Spindel verstellbar ausgebildet sein.

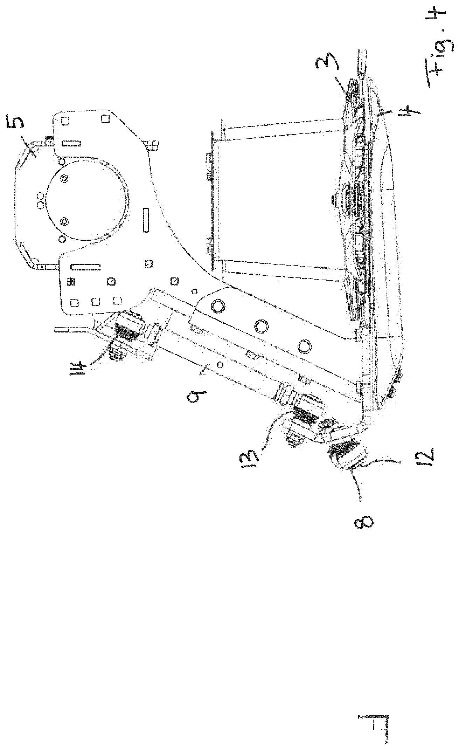

Der genannte stehend ausgerichtete Lenker 9 kann dabei tatsächlich vertikal ausgerichtet sein, aber auch gegenüber der Vertikalen spitzwinklig geneigt angeordnet sein. Insbesondere kann der stehende Lenker 9 in der unausgelenkten Mittel- bzw. Neutralstellung der beiden Mähwerksteile 2a und 2b in einer vertikalen, fahrtrichtungsparallelen Ebene zur Vertikalen spitzwinklig geneigt schräg nach vorne oben geneigt angestellt sein, vgl. Figur 2 und Figur 4.

Betrachtet man eine Ebene, die zu beiden Lenkern 8 und 9 parallel ausgerichtet ist, kann sich diese Ebene quer zur Fahrtrichtung zur Vertikalen spitzwinklig geneigt erstrecken, und zwar vorteilhafterweise in Fahrtrichtung schräg nach vorne oben. Durch eine solche leicht aus der Vertikalen herausgekippte Lenkeranordnung kann nicht nur eine platzsparende, an den Mähwerksteilen nicht stark auftragende Ausbildung erreicht werden, sondern es kann beim Anfahren eines Mähwerksteils 2a oder 2b an ein Hindernis auch eine leichte Aushubbewegung erzielt werden, die den Schneidbalken 4 über das Hindernis hinweghebt.

Die Lenkeranordnung 7 sieht nämlich vorteilhafterweise nicht nur die genannte Bodenanpassachse 10 vor, um die die beiden Mähwerksteile 2a und 2b relativ zueinander abknicken bzw. abwinkeln können, sondern erlaubt vorteilhafterweise auch Verschiebe- und/oder Pendelbewegungen der beiden Mähwerksteile 2a und 2b relativ zueinander, die zumindest näherungsweise in Fahrtrichtung erfolgen oder eine fahrtrichtungsparallele Komponente aufweisen können. Mit anderen Worten kann der eine Mähwerksteil 2a relativ zum anderen Mähwerksteil 2b in Fahrtrichtung leicht nach vorne oder hinten verschwenken bzw. sich verschieben. Gleichzeitig kann hierbei auch eine Höhenbewegungskomponente vorgesehen sein, die es gestattet, bei Auflaufen auf ein Hindernis wie beispielsweise einen Erdhügel das eine Mähwerksteil über das Hindernis hinweg zu heben, während der andere Mähwerksteil bodennah weiter mäht.

Alternativ oder zusätzlich zu den genannten Verschiebungen in Fahrtrichtung kann die Lenkeranordnung zumindest begrenzt auch Relativbewegungen in vertikaler Richtung und/oder mit einer Vertikalkomponente vorsehen.

Vorteilhafterweise ist dieser mögliche Höhenversatz der beiden Mähwerksteile 2a und 2b an der Schnittstelle zwischen den beiden Mähwerksteilen 2a und 2b jedoch begrenzt, um keine übermäßig ungleiche Arbeitstiefe bzw. -höhe zu haben, die beispielsweise zu einem übermäßig ungleichen Schnitt des Bodenbewuchs führen würde. Insbesondere kann der stehende Lenker 9 einen solchen übermäßigen Höhenversatz der beiden Mähwerksteile 2a und 2b zueinander vermeiden oder zumindest begrenzen.

Sind die Verbindungslenker 8 und 9 in der vorgenannten Weise gekrümmt und/oder abgeknickt ausgebildet, beispielsweise um den Platzverhältnissen der Einbausituation Rechnung zu tragen, sind die zuvor erläuterten Ausrichtungen der Verbindungslenker 8 und 9 im Sinne der Verbindungsgeraden zu verstehen, die durch die jeweiligen Anlenkpunkte 11 und 12 bzw. 13 und 14 gehen. Die Ausrichtung und Anordnung der Verbindungsgeraden durch die Anlenkpunkte 11 und 12 und der Verbindungsgeraden durch die Anlenkpunkte 13 und 14 steht stellvertretend für die beschriebenen Lenkerausrichtungen und -anordnungen.

Vorteilhafterweise können die Anlenkpunkte 11, 12, 13 und 14 von Kugelgelenken gebildet sein, sodass jeder Verbindungslenker 8 und 9 gegenüber jedem Mähwerksteil 2a und 2b mehrachsig verschwenkbar ist, gleichzeitig aber translatorisch im Anlenkpunkt fixiert ist. Alternativ zu solchen Kugelgelenken können auch andere mehrachsig verschwenkbare Gelenke vorgesehen sein, beispielsweise Kardangelenke.

Alternativ oder zusätzlich können aber auch Gelenke mit anderen Kinematiken vorgesehen sein, beispielsweise ein Drehschubgelenk, das eine Drehung um eine Achse und eine davon unabhängige Vorschubbewegung längs derselben Achse zulässt. Je nach Kombination der Gelenkstypen und der Anordnung der Anlenkpunkte 11, 12, 13, 14 relativ zueinander können hierdurch unterschiedliche Kinematiken zwischen den beiden miteinander verbundenen Mähwerksteilen 2a und 2b erzielt werden.

Durch die genannte Lenkeranordnung 7 umfassend die beiden Verbindungslenker 8 und 9 und deren Anlenkgelenke können die beiden Mähwerks- bzw. Aggregatsteile 2a und 2b relativ zueinander einerseits um die genannte Bodenanpassachse 10 abgewinkelt werden und andererseits in Fahrtrichtung relativ zueinander verschoben werden, wobei vorteilhafterweise auch noch zumindest beschränkte Höhenauslenkungen der beiden Mähwerks- bzw. Aggregatsteile 2a und 2b relativ zueinander vorgesehen sein können, um einseitige Bodenhindernisse besser überwinden zu können, ohne das Arbeitsergebnis im Bereich des anderen Aggregatsteils zu sehr zu beeinträchtigen.

## Patentansprüche

1. Landwirtschaftliche Maschine, insbesondere Mähmaschine, umfassend zumindest ein über den Boden zu führendes Arbeitsaggregat (2), das zumindest zwei Aggregatsteile (2a, 2b) umfasst, die durch eine Gelenkverbindung (6) miteinander verbunden und in ihrer Arbeitsstellung zur Bodenanpassung um eine liegende Bodenanpassachse (10) zueinander neigbar sind, **dadurch gekennzeichnet, dass** die Gelenkverbindung (6) von einer Lenkeranordnung (7) umfassend zwei Verbindungslenker (8, 9) gebildet ist, die jeweils mit einem Endabschnitt gelenkig an dem einen Aggregatsteil (2a) und mit einem gegenüberliegenden Endabschnitt gelenkig an dem anderen Aggregatsteil (2b) angelenkt sind und einander kreuzend ausgerichtet sind derart, dass die Verbindungslenker (8, 9) die genannte Bodenanpassachse (10) in Form einer Momentandrehachse ausbilden.

2. Landwirtschaftliche Maschine nach dem vorhergehenden Anspruch, wobei die Verbindungslenker (8, 9) derart ausgerichtet und/oder die Gelenkpunkte (11, 12, 13, 14) der Verbindungslenker (8, 9) derart ausgebildet und angeordnet sind, dass die Aggregatsteile (2a, 2b) zusätzlich zu der genannten Neigbarkeit um die Bodenanpassachse (10) relativ zueinander in Fahrtrichtung verschiebbar sind.

3. Landwirtschaftliche Maschine nach einem der vorhergehenden Ansprüche, wobei die Verbindungslenker (8, 9) derart ausgerichtet und/oder die Gelenkpunkte (11, 12, 13, 14) der Verbindungslenker (8, 9) derart ausgebildet und angeordnet sind, dass die Aggregatsteile (2a, 2b) zusätzlich zu der genannten Neigbarkeit um die Bodenanpassachse (10) relativ zueinander in Höhenrichtung verschiebbar sind.

4. Landwirtschaftliche Maschine nach einem der vorhergehenden Ansprüche, wobei die Gelenke an den Anlenkpunkten (11, 12, 13, 14) der beiden Verbindungslenker (8, 9) jeweils mehrachsig schwenkbar ausgebildet sind.

5. Landwirtschaftliche Maschine nach dem vorhergehenden Anspruch, wobei die Verbindungslenker (8, 9) jeweils durch ein Kugelgelenk an jedem der beiden Aggregatsteile (2a, 2b) befestigt sind.

6. Landwirtschaftliche Maschine nach einem der vorhergehenden Ansprüche, wobei die Verbindungslenker (8, 9) bei Betrachtung senkrecht auf eine Ebene, die parallel zu beiden Verbindungslenkern (8, 9) ist, zueinander zumindest näherungsweise rechtwinklig ausgerichtet sind.

7. Landwirtschaftliche Maschine nach dem vorhergehenden Anspruch, wobei bei Betrachtung in der genannten Ebene eine Verbindungsgerade durch die Anlenkpunkte (13, 14) des einen Verbindungslenkers (9) die Verbindungsgerade durch die Anlenkpunkte (11, 12) des anderen Verbindungslenkers (8) etwa mittig teilt, zumindest wenn sich die Aggregatsteile (2a, 2b) in einer unausgelenkten Neutralstellung befinden.

8. Landwirtschaftliche Maschine nach einem der beiden vorhergehenden Ansprüche, wobei einer der Lenker (8) liegend quer zur Fahrtrichtung und der andere Lenker (9) stehend ausgerichtet ist.

9. Landwirtschaftliche Maschine nach dem vorhergehenden Anspruch, wobei der liegende Verbindungslenker (8) unterhalb des stehenden Lenkers angeordnet ist und zumindest bodennah im Bereich der Bearbeitungsebene der beiden Aggregatsteile (2a, 2b) positioniert ist.

10. Landwirtschaftliche Maschine nach einem der vorhergehenden Ansprüche, wobei die Anlenkpunkte (11, 12, 13, 14) der Verbindungslenker (8, 9) an den einander benachbarten Endabschnitten der Aggregatsteile (2a, 2b) vorgesehen sind.

11. Landwirtschaftliche Maschine nach einem der vorhergehenden Ansprüche, wobei die Verbindungslenker (8, 9) und/oder die Verbindungsgeraden durch deren Anlenkpunkte (11, 12; 13, 14) beide parallel zu einer Ebene angeordnet sind, die sich aufrecht quer zur Fahrtrichtung erstreckt, insbesondere spitzwinklig zur Vertikalen schräg nach vorne oben in Fahrtrichtung geneigt ist.

12. Landwirtschaftliche Maschine nach einem der vorhergehenden Ansprüche, wobei die Verbindungslenker (8, 9) an einer Heckseite des Arbeitsagregats (2) im Bereich der Schnittstelle zwischen dessen Aggregatsteilen (2a, 2b) angeordnet sind.

13. Landwirtschaftliche Maschine nach einem der vorhergehenden Ansprüche, wobei zumindest einer der Verbindungslenker (8, 9) längenveränderbar und/oder -einstellbar ausgebildet ist.

14. Landwirtschaftliche Maschine nach einem der vorhergehenden Ansprüche, wobei das Arbeitsaggregat (2) an einem sich oberhalb des Arbeitsaggregats (2) erstreckenden Tragarm pendelnd aufgehängt ist, der ein mit beiden Aggregatsteilen gelenkig verbundenes Trägerjoch umfasst, das selbst gelenkig an einem Haupttragarmteil befestigt ist und die Schnittstelle zwischen den Aggregatsteilen (2a, 2b) übergreift.

15. Landwirtschaftliche Maschine nach dem vorhergehenden Anspruch, wobei die Verbindungslenker (8, 9) unverbunden mit dem Träger und dem Trägerjoch alleine mit den beiden Aggregatsteilen (2a, 2b) verbunden sind und/oder nur über die Aggragatsteile (2a, 2b) mit dem Trägerjoch verbunden sind.
